(19) **Europäisches Patentamt**
**European Patent Office**
**Office européen des brevets**

(11) **EP 4 664 220 A1**

(12) **EUROPEAN PATENT APPLICATION**

(43) Date of publication:
**17.12.2025 Bulletin 2025/51**

(21) Application number: **25182601.2**

(22) Date of filing: **13.06.2025**

(51) International Patent Classification (IPC):
**G05B 23/02** *(2006.01)* **G06N 3/045** *(2023.01)*
**G07C 5/08** *(2006.01)*

(52) Cooperative Patent Classification (CPC):
**G05B 23/024; G05B 23/0283; G06N 3/045;**
**G06N 3/08; G06N 3/084; G06N 3/088; G06N 20/10;**
**G06N 20/20;** B60W 50/0205; G07C 5/0808

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **14.06.2024 US 202463660188 P**

(71) Applicant: **VOLVO TRUCK CORPORATION**
**405 08 Göteborg (SE)**

(72) Inventor: **REKIK, Mohamed**
**69100 VILLEURBANNE (FR)**

(74) Representative: **Lavoix**
**62, rue de Bonnel**
**69448 Lyon Cedex 03 (FR)**

(54) **METHOD, DEVICE AND SYSTEM FOR AUTOMATIC FUNCTIONING ASSESSMENT OF A TRANSPORT VEHICLE**

(57) This method for automatic functioning assessment of a transport vehicle comprises collecting input signals formed of time series of data representative of the transport vehicle operation, the method further comprising:
- applying (52, 56, 58, 60) a first machine learning anomaly detection method on one or several input signals,
- applying (51, 53, 55, 57, 59) a second machine learning anomaly detection method on one or several input signals, each of the first and second machine learning anomaly detection methods applies a model previously trained on time series of data representative of defaultless operation of the transport vehicle,
- detecting (62) a presence of anomaly based on combined results of said first and second machine learning anomaly detection methods;
- in case of anomaly detection, raising (64) an alarm and/or triggering predictive maintenance.

FIG.2

EP 4 664 220 A1

**Description**

**TECHNICAL FIELD**

The disclosure relates generally to automatic assessment of the transport vehicles functioning and predictive maintenance. In particular aspects, the disclosure relates to a method and device for functioning assessment of a transport vehicle, an associated device, system and computer program. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

In the field of transport vehicles, and more particularly heavy-duty vehicles, it is usual to gather and check night logs, to detect if the vehicle functioning is nominal, or otherwise if some anomalies occurred. If some anomalies are detected, when possible, it means that some maintenance might be needed. Traditionally, the checking of night logs is carried out by operators. Such a task is repetitive and time consuming. Furthermore, sometimes detecting anomalies is very difficult, and the detection only occurs at a stage when some vehicle component has some default or malfunctioning and needs to be replaced rapidly.

There is a need for automatic detection of anomalies in vehicle functioning, in order to save time and also, in order to provide help to the operators. Furthermore, it may be useful to detect anomalies as soon as possible, in advance, so as to provide timely alerts for predictive maintenance.

**SUMMARY**

According to a first aspect, the disclosure concerns a method for automatic functioning assessment of a transport vehicle comprising collecting input signals formed of time series of data representative of the transport vehicle operation, the method further comprising:

- applying a first machine learning anomaly detection method on one or several input signals,
- applying a second machine learning anomaly detection method on one or several input signals, wherein each of the first and second machine learning anomaly detection methods applies a model previously trained on time series of data representative of defaultless operation of the transport vehicle,
- detecting a presence of anomaly based on combined results of said first and second machine learning anomaly detection methods;
- in case of anomaly detection, raising an alarm and/or triggering predictive maintenance.

The first aspect of the disclosure may seek to automatically detect anomalies in the functioning of the vehicle, and automatically trigger alarms and/or predictive maintenance. A technical benefit may include detecting anomalies automatically and efficiently, with higher accuracy while saving operator time.

Optionally in some examples, including in at least one preferred example, the presence of anomaly is detected if the first and/or the second machine learning detection method indicates a presence of anomaly in the functioning of the transport vehicle.

Optionally in some examples, including in at least one preferred example, the transport vehicle is a truck, comprising a plurality of electronic control units and an internal communication network, and the input signal comprises data obtained by analyzing logs of exchanges between the electronic control units via the internal communication network.

Optionally in some examples, including in at least one preferred example, the first machine learning anomaly detection method implements an autoencoder neural network on an input signal, to auto-encode the input signal into an intermediate signal of smaller dimension than the input signal, extrapolate the intermediate signal into a first reconstructed signal, the first reconstructed signal being of same dimension as the input signal, the method further comprising computing a first distance between the input signal and the first reconstructed signal using a predetermined metric; if the computed first distance exceeds a first predetermined threshold, saving a first detection of anomaly.

Optionally in some examples, including in at least one preferred example, the first or the second machine learning anomaly detection method is one of the following methods: principal component analysis, Gaussian distribution, Multivariate Gaussian algorithm, or Isolation Forest.

Optionally in some examples, including in at least one preferred example, the second machine learning anomaly detection method is principal component analysis, the method comprising: multiplying the input signal by a first principal component matrix to compute a vector representative of the input signal, and multiplying the vector representative of the input signal by a second principal component matrix to obtain a second reconstructed signal, computing a second distance between the input signal and the second reconstructed signal using a predetermined metric, if the computed second distance exceeds a second predetermined threshold, saving a second detection of anomaly.

Optionally in some examples, including in at least one preferred example, the method comprises applying principal component analysis (PCA) on the input signal to compute a vector representative of the input signal of smaller dimension than the input signal, applying an autoencoder neural network on said vector to obtain a reconstructed vector, and applying the PCA reconstruction on the reconstructed vector to obtain a combined reconstructed signal.

Optionally in some examples, including in at least one preferred example, the method further comprises computing a third distance between the input signal and the combined reconstructed signal using a predetermined metric; if the computed third distance exceeds a third predetermined threshold, detecting an anomaly of functioning and raising an alarm and/or triggering predictive maintenance.

Optionally in some examples, including in at least one preferred example, the method comprises selecting a detection window on time series of data representative of the transport vehicle operation.

According to a second aspect, the disclosure concerns a device for automatic functioning assessment of a transport vehicle comprising a module configured to collect input signals formed of time series of data representative of the transport vehicle operation, the device further comprising a processor configured to implement:

- a first machine learning anomaly detection module on one or several input signals,
- a second machine learning anomaly detection module on one or several input signals, wherein each of the first and second machine learning anomaly detection modules implements a model previously trained on time series of data representative of defaultless operation of the transport vehicle,
- a detecting module to detect a presence of anomaly based on combined results of said first and second machine learning anomaly detection modules.
- a module configured to raise an alarm and/or trigger predictive maintenance, in case of anomaly detection.

The second aspect of the disclosure may seek to automatically detect anomalies in the functioning of the vehicle, and automatically trigger alarms and/or predictive maintenance. A technical benefit may include detecting anomalies automatically and efficiently, with higher accuracy while saving operator time.

Optionally in some examples, including in at least one preferred example, a presence of anomaly is detected if the first and/or the second machine learning detection module indicates a presence of anomaly in the functioning of the transport vehicle.

Optionally in some examples, including in at least one preferred example, the transport vehicle is a truck, comprising a plurality of electronic control units and an internal communication network, and wherein the input signal comprise data obtained by analyzing logs of exchanges between the electronic control units.

Optionally in some examples, including in at least one preferred example, the first machine learning anomaly detection module implements: auto-encode the input signal into an intermediate signal of smaller dimension than the input signal, extrapolate the intermediate signal into a reconstructed signal, the reconstructed signal being of same dimension as the input signal, compute a distance between the input signal and the reconstructed signal using a predetermined metric; if the computed first distance exceeds a first predetermined threshold, saving a first detection of anomaly.

Optionally in some examples, including in at least one preferred example, the first or the second machine learning anomaly detection module implements one of {principal component analysis, Gaussian distribution, Multivariate Gaussian algorithm, or Isolation Forest}.

Optionally in some examples, including in at least one preferred example, the second machine learning anomaly detection module implements principal component analysis, the device being configured to: multiply the input signal by a first principal component matrix to compute a vector representative of the input signal, and multiply the vector representative of the input signal by a second principal component matrix to obtain a second reconstructed signal, compute a second distance between the input signal and the second reconstructed signal using a predetermined metric; and if the computed second distance exceeds a second predetermined threshold, saving a second detection of anomaly.

Optionally in some examples, including in at least one preferred example, the device is configured to implement: applying principal component analysis (PCA) on the input signal to compute a vector representative of the input signal of smaller dimension than the input signal, applying an autoencoder neural network on said vector to obtain a reconstructed vector, and applying PCA reconstruction on the reconstructed vector to obtain a combined reconstructed signal.

Optionally in some examples, including in at least one preferred example, the device comprises a selecting module for selecting a detection window on time series of data representative of the transport vehicle operation.

According to a third aspect, the disclosure concerns a system for automatic functioning assessment of a transport vehicle comprising a device for automatic functioning assessment of a transport vehicle as described above, and a transport vehicle, the device being configured to communicate with the transport vehicle and to receive from said transport vehicle series of data representative of the transport vehicle operation. The third aspect of the disclosure may seek to automatically detect anomalies in the functioning of the vehicle, and automatically trigger alarms and/or predictive maintenance. A technical benefit may include detecting anomalies automatically and efficiently, with higher accuracy while saving operator time.

According to a fourth aspect, the disclosure concerns a computer program product comprising program code for performing, when executed by the processing circuitry, the method of automatic functioning assessment of a transport vehicle as briefly described above.

According to a fifth aspect, the disclosure concerns a non-transitory computer-readable storage medium comprising instructions, which when executed by the processing circuitry, cause the processing circuitry to perform the method of automatic functioning assessment of a transport vehicle as briefly described above.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

> **FIG. 1** is an exemplary system diagram of a vehicle comprising a device for functioning assessment according to an example.
> **FIG. 2** is an exemplary flowchart of a method for automatic functioning assessment of a transport vehicle, according to an example;
> **FIG. 3** is an exemplary schematic diagram of applying autoencoder for anomaly detection, according to an example;
> **FIG. 4** is an exemplary flowchart of a method for automatic functioning assessment of a transport vehicle, according to another example;
> **FIG. 5** is an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

This disclosure describes method and devices for functioning assessment of a transport vehicle, in order to trigger alarms and/or predictive maintenance.

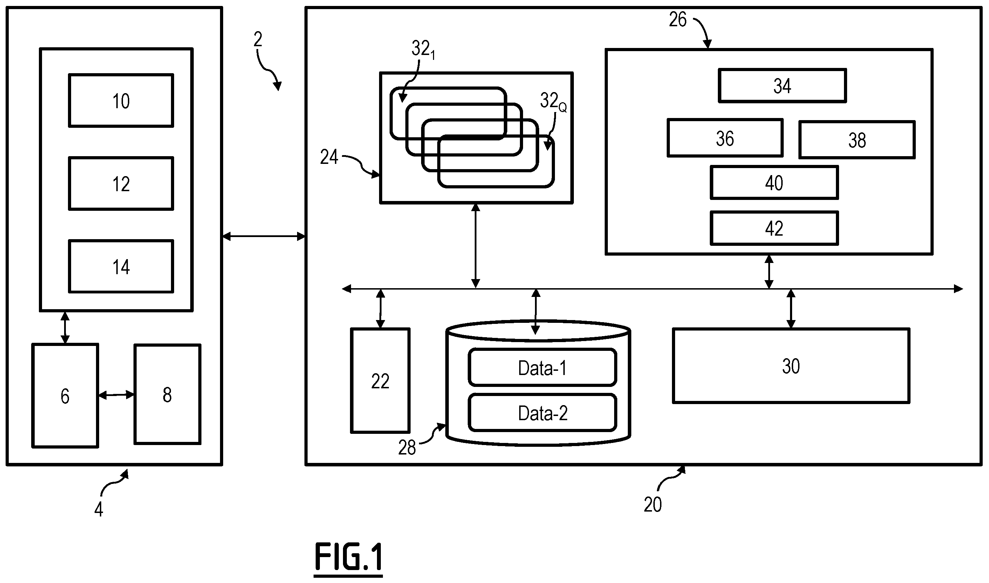

**FIG. 1** is an exemplary system 2 diagram for automatic functioning assessment of a transport vehicle 4, according to an example.

The vehicle 4 is represented schematically, and may be any type of vehicle, in particular a heavy-duty vehicle, e.g. a truck, a bus or a construction equipment, among other vehicle types. The disclosure is not limited to a particular type of vehicle.

The vehicle 4 comprises several on-board Electronic Control Units (ECU) 10, 12, 14 which collect raw operation data or signals related to the vehicle operation, e.g. vehicle speed, engine speed, level of remaining fuel or remaining stored electrical energy for an electric vehicle. Each ECU is an on-board device. It is understood that only three such ECUs are represented in the figure 1, but in practice, the number of on-board ECUs may be any number from 1 to N, N being an integer.

The vehicle 4 further comprises a first communication interface 6 configured to communicate with at least one other ECU 10, 12, 14. The first communication interface 6 is for example CAN (for Controller Area Network) bus interface, which allows all ECUs 10, 12, 14 to communicate via an internal communication network, using a CAN bus standard.

Alternatively, one or each of the on-board ECUs comprises a similar first communication interface.

Furthermore, the vehicle 4 comprises a second communication interface 8, configured to communicate by wireless technology with external devices, in particular with a device 20 for automatic functioning assessment of vehicle 4. For example, the second communication interface 8 is adapted to communicate via radio waves, according to a Wi-Fi protocol, or a cellular network protocol such as 4G or 5G.

Device 20 for automatic functioning assessment of vehicle 4 may be onboard or offboard the vehicle 4.

Device 20 for automatic functioning assessment of vehicle 4 is an electronic programmable device such as a computer.

The automatic functioning assessment device 20 comprises a communication interface 22 configured to communicate using the same wireless technology as the second communication interface 8. Therefore, the automatic functioning assessment device 20 is configured to communicate with the ECUs 10, 12, 14.

The automatic functioning assessment device 20 also comprises an electronic memory unit 24 and a processor 26, which communicate through an internal bus 25. Furthermore, the automatic functioning assessment device 20 may comprise or be connected to an electronic storage 28 of databases Data-1, Data-2 of signals from time series data representative of nominal (or defaultless) operation of the vehicle 4, and a man-machine interface 30 comprising a display unit (e.g. a display screen) for information display. The databases Data-1, Data-2 etc. are typically useful for training machine learning models for detecting anomalies.

The automatic functioning assessment device 20 is configured to receive from the vehicle 4, and more particularly from the ECUs 10, 12, 14, data representative of the functioning (or operation) of the vehicle 4, in the form of time series of data representative of the transport vehicle operation, which are stored for example in the form of logs $32_1...32_Q$ in the electronic memory unit 24 as shown in the FIG. 1.

The processor 26 of the automatic functioning assessment device 20 is configured to implement, according to an example, a collecting module 34 configured to collect input signals formed of time series of data representative of the transport vehicle operation. Each input signal is, for example, a digital signal, formed of a time series of values representative of various parameters collected from the stored logs $32_1...32_Q$ during a detection window, starting at a chosen start time. The length and start time for each detection window may vary in time.

The time series of data representative of the transport vehicle operation comprises, for example, data representative of current and requested electric motors speed, current and voltage on electric motor, current and requested electric motors torque, electric motors temperature, oil temperature, oil pressure, requested and current oil pump speed, oil pump temperature, forks position, gear lever position, vehicle speed, current requested gear, SoC or the like.

The processor 26 is also configured to implement, according to an example, a first machine learning anomaly detection module 36 to be applied on one or several input signals and a second machine learning anomaly detection module 38 to be applied on one or several input signals.

According to a preferred example, the first machine learning anomaly detection module 36 implements applying an autoencoder neural network.

The processor 26 is also configured to implement, according to an example, a detecting module 40 for detecting a presence of anomaly based on combined results of the first and second machine learning anomaly detection modules and a module 42 for raising an alarm and/or triggering predictive maintenance in case of anomaly detection.

According to an example, the first and second machine learning anomaly detection modules implement one of the following methods: autoencoder neural network, principal component analysis (PCA), Gaussian distribution, Multivariate Gaussian algorithm, or Isolation Forest.

For example, advantageously, the module 42 for raising the alarm and/or triggering predictive maintenance is connected to the man-machine interface 30 so as to provide information related to the anomalies detected to an operator.

According to an example, each module 34, 36, 38, 40, 42 may be implemented as software code, and cooperate to achieve a computer program, including software instructions which, when executed by a programmable electronic device or the processing unit 26, implement a method for automatic functioning assessment of a transport vehicle.

Preferably, the modules 34, 36, 38, 40, 42 are memorized on a non-transitory storage device readable by a processing system, for example a non-transitory storage of a server system, such as a random-access memory (RAM), read only memory (ROM), remote access hardware drive (conventional hard drive or cloud storage) accessible through direct connection, wired or wireless or a combination thereof.

According to a variant, each of the modules 34, 36, 38, 40, 42 is implemented in the form of a programmable logic component, such as a Field Programmable Gate Array (FPGA), a general-purpose graphics processing unit (GPGPU), or a dedicated integrated circuit such as an application specific integrated circuit (ASIC).

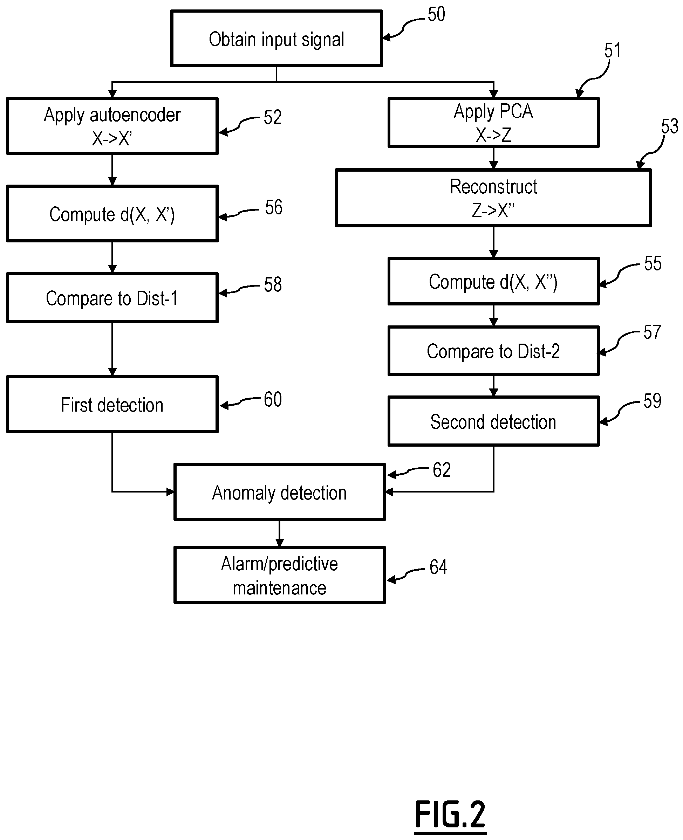

**FIG. 2** is an exemplary flowchart of a method for automatic functioning assessment of a transport vehicle according to an example, implemented by a processor 26 of a device 20.

The method comprises collecting 50 input signals formed of time series of data representative of the transport vehicle operation, the collecting of inputs signals comprising adapting a sliding window on time series of data representative of the transport vehicle operation.

The collecting 50 provides one or several input signals X, each input signal being a digitized signal comprising a series of T samples $\{X_1,...X_T\}$, T being a chosen integer value.

The method then comprises applying at least two machine learning anomaly detection methods, each of the methods applying a model previously trained on time series of data representative of defaultless operation of the transport vehicle, the machine learning anomaly detection methods belonging to a set of methods comprising: autoencoder neural network, principal component analysis (PCA), Gaussian distribution, Multivariate Gaussian algorithm, or Isolation Forest.

In the example of figure 2, preferably, the method comprises applying 52 a first anomaly detection model, comprising applying an autoencoder neural network and applying 51 a second anomaly detection model.

According to an example, the second anomaly detection model applies a principal component analysis (PCA).

The autoencoder neural network is a neural network which applies, on a input signal X of dimension T, a chosen number of neural network layers to transform the input signal into an intermediate signal Y, of dimension R which is smaller than T, and then applies another number of neural network layers to extrapolate the intermediate signal Y into a reconstructed signal X' of same dimension T as the input signal X. The term dimension refers to the number of samples of each of the signals. The intermediate signal Y is also known as a latent representation of the input signal X in a so-called latent representation space.

In other words, the reconstructed signal X', also called first reconstructed signal, is a representation of the input signal X.

The method then may comprise comparing the input signal X and the reconstructed signal X'.

According to an example, the method computes 56 a distance, called a first distance, between the input signal and the first reconstructed signal using a predetermined metric, such as the mean square error (MSE).

$$MSE = \frac{1}{n}\sum_{i=1}^{n} e_i^2 = \frac{1}{n}\sum_{i=1}^{n}(y_i - \hat{y}_i)^2$$

According to another example, the predetermined metric is the RMSE (Root Mean Squared Error). Advantageously, the RMSE is expressed in the same unit as the variable to be predicted and is therefore easier to interpret.

$$RMSE = \sqrt{MSE} = \sqrt{\frac{1}{n}\sum_{i=1}^{n}(y_i - \hat{y}_i)^2}$$

The first distance between the input signal X and the reconstructed signal X', d(X, X') is then compared 58 to a first predetermined threshold, and if the first distance d(X, X') exceeds the first predetermined threshold Dist-1, saving 60 a first detection of anomaly in the functioning of the vehicle. In other words, if the first distance exceeds the Dist-1, the first anomaly detection method detects an anomaly.

The method further comprises, according to an example, applying a second machine learning anomaly detection method such as the PCA (step 51).

The PCA is a technique used to reduce the dimensionality of high-dimensional data while retaining most of its variance. By projecting the data back into the original feature space, the PCA identifies anomalies as data points with significant reconstruction errors. It is particularly effective for detecting anomalies in datasets with linearly correlated features.

According to an embodiment, the PCA is applied on an input signal X of dimension T, which may also be represented, mathematically, as a T-dimensional vector, to obtain a vector Z of dimension K, where K is significantly smaller than T, K<<T. The vector Z is vector representative of the input signal but of smaller dimension. The PCA transforms the input vector by using a matrix $U_{reduce}$ of size T*K. The $U_{reduce}$ matrix represents the transformation matrix for the PCA. It consists of the first K columns, which are computed using the eigen vectors of the covariance matrix of the original data, the original data being typically nominal data without anomalies. $Z = U_{reduce}^{trans}X$ where $U_{reduce}^{trans}$ is transposed from $U_{reduce}$

The method comprises a step 53 of reconstructing an approximation X'', which is a second reconstructed signal, by applying matrix $U_{reduce}$ : $X'' = U_{reduce}Z$. In other words, step 53 applies projecting back the transformed vector Z, of dimension K, into the original feature space of dimension T.

The method further comprises, according to an example, computing 55 a second distance between the input signal X and the second reconstructed signal, $d(X,X'')$ using a predetermined metric, which may be the same as the metric used in step 56, for example the mean square error (MSE) or the root mean square error (RMSE).

The method then comprises comparing the second distance $d(X,X'')$ between the input signal X and the second reconstructed signal X'', to a second predetermined threshold Dist-2 (step 57), and if the second distance $d(X,X'')$ exceeds the second predetermined threshold, saving 59 a second detection of anomaly in the functioning of the vehicle.

The method also comprises, according to an example, detecting 62 a presence of anomaly based on combined results of said first and second machine learning anomaly detection methods.

According to an example, the detecting 62 may be acknowledged when the first anomaly detection or the second anomaly detection have been acknowledged, in other words, when at least one of the first anomaly detection method and the second anomaly detection method indicated an anomaly.

According to a variant, the detecting 62 may be acknowledged when the first anomaly detection and the second anomaly detection have been acknowledged, in other words, when both the first anomaly detection method and the second anomaly detection method indicated an anomaly.

In case of detection 62 of the presence of an anomaly, the method further comprises a step 64 of raising an alarm and/or triggering predictive maintenance.

Advantageously, the PCA is particularly effective for detecting anomalies in datasets with linearly correlated features. Compared to autoencoders, the PCA is simpler and often faster to compute.

It is clear, as a variant or as a complement, that other anomaly detection methods may be applied and combined similarly to determine an anomaly in the vehicle functioning. For example, three or four anomaly detection methods may be applied and combined to determine an anomaly in the vehicle functioning, including {Gaussian distribution, Multivariate Gaussian Algorithm with normally distributed data or Isolation Forest}.

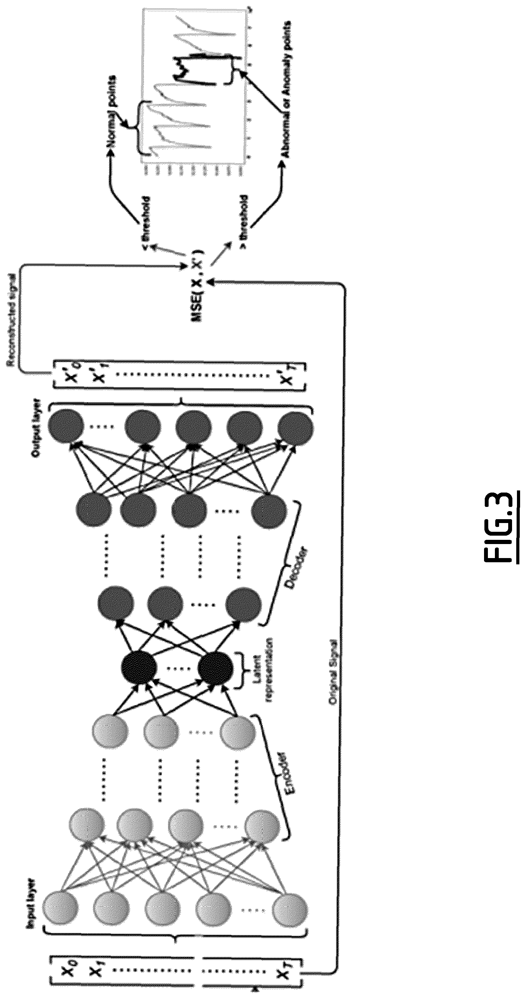

**FIG. 3** is an exemplary schematic diagram of applying an autoencoder for anomaly detection on an input signal $X=\{X_1,..., X_T\}$ transformed into a reconstructed signal $X'=\{X'_1,...,X'_T\}$.

Advantageously, applying an auto-encoder neural network previously trained on time series of data representative of nominal (or defaultless) functioning of the vehicle 4 provides information of unusual patterns of the input signal. Indeed, the autoencoder provides a reconstructed signal which is representative of unusual patterns of the time series during nominal functioning, and therefore, if the computed distance between the input signal and the reconstructed signal is higher than a predetermined threshold, an unusual pattern, potentially representative of some kind of anomaly, is detected, and preferably highlighted.

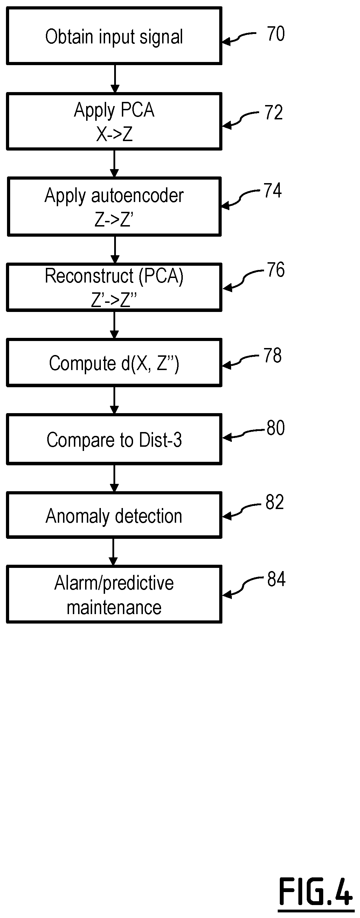

**FIG. 4** is a flowchart of a method for automatic functioning assessment of a transport vehicle according to another example, implemented by a processor 26 of a device 20.

According to this example, the method comprises combining a first machine learning anomaly detection and a second machine learning anomaly detection consecutively.

As shown in figure 4, the method comprises a step 70 of collecting input signals formed of time series of data representative of the transport vehicle operation, the collecting of input signals comprising adapting a sliding window on time series of data representative of the transport vehicle operation, which is analogous to step 50 previously described.

The method further comprises applying 72 PCA on the input signal, represented as in input vector, to obtain a vector Z of smaller dimension, which is representative of the input signal X, similarly, to step 51 previously described.

Next, the method comprises applying 74 an autoencoder neural network on the result of previous step 72 (i.e., on vector Z), analogously to step 52 described above, to obtain a reconstructed vector $Z'$ of same dimension as vector Z obtained by PCA.

The reconstructed vector $Z'$, of dimension K, is then transformed 76 by applying PCA reconstruction into a so-called combined reconstructed signal Z" of dimension T, which is the same as the dimension of the input signal.

The method then comprises computing 78 a third distance between the input signal X and the combined reconstructed signal Z" using a predetermined metric, such as the mean square error (MSE) or the root mean square error (RMSE).

The third distance between the input signal X and the reconstructed signal Z'', d(X, Z") is then compared 80 to a third predetermined threshold, and if the third distance d(X, Z") exceeds the third predetermined threshold, an anomaly is detected (step 82) in the functioning of the vehicle.

In case of detection 82 of the presence of an anomaly, the method further comprises a step 84 of raising an alarm and/or triggering predictive maintenance.

Advantageously in this second example, the dimensionality is reduced before applying the autoencoder neural network, therefore the computation is quicker, and the training of the autoencoder neural network is also quicker.

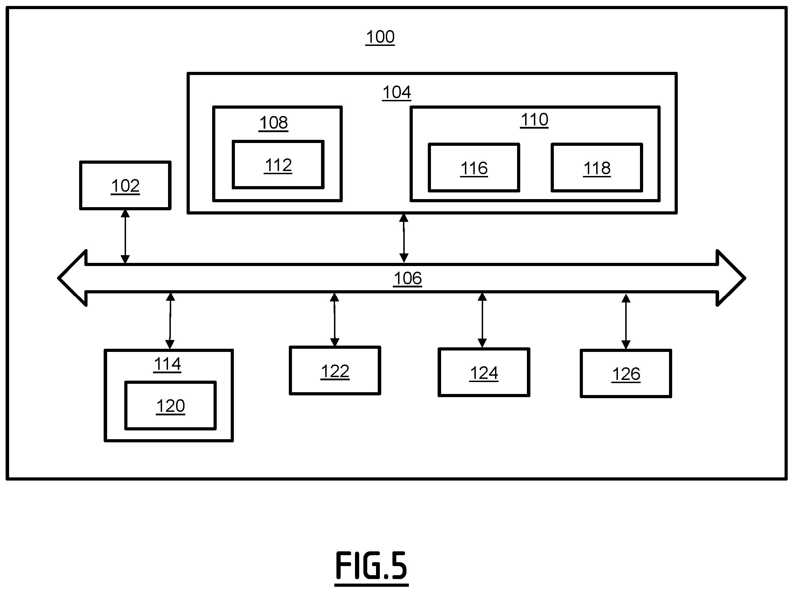

**FIG. 5** is a schematic diagram of an exemplary computer system 100 for implementing examples of methods for automatic functioning assessment of a transport vehicle disclosed herein, according to an example.

The computer system 100 is adapted to execute instructions from a computer-readable medium to perform these and/or any of the functions or processing of the method for automatic functioning assessment of a transport vehicle described herein. The computer system 100 may be connected (e.g., networked) to other machines in a LAN, an intranet, an extranet, or the Internet. While only a single device is illustrated, the computer system 100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 100 may comprise at least one computing device or electronic device capable of including firmware, hardware, and/or executing software instructions to implement the functionality described herein. The computer system 100 may include processing circuitry 102 (e.g., processing circuitry including one or more processor devices or control units), a memory 104, and a system bus 106. The computer system 100 may include at least one computing device having the processing circuitry 102. The system bus 106 provides an interface for system components including, but not limited to, the memory 104 and the processing circuitry 102. The processing circuitry 102 may include any number of hardware components for conducting data or signal processing or for executing computer code stored in memory 104. The processing circuitry 102 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 102 may further include computer executable code that controls operation of the programmable device.

The system bus 106 may be any of several types of bus structures that may further interconnect to a memory bus (with or without a memory controller), a peripheral bus, and/or a local bus using any of a variety of bus architectures. The memory 104 may be one or more devices for storing data and/or computer code for completing or facilitating methods described herein. The memory 104 may include database components, object code components, script components, or other types of information structure for supporting the various activities herein. Any distributed or local memory device may be utilized with the systems and methods of this description. The memory 104 may be communicably connected to the processing circuitry 102 (e.g., via a circuit or any other wired, wireless network connection) and may include computer code for executing one or more processes described herein. The memory 104 may include nonvolatile memory 108 (e.g., read-only memory (ROM), erasable programmable read-only memory (EPROM), electrically erasable programmable read-only memory (EEPROM), etc.), and volatile memory 110 (e.g., random-access memory (RAM)), or any other medium which can be used to carry or store desired program code in the form of machine-executable instructions or data structures and which can be accessed by a computer or other machine with processing circuitry 102. A basic input/output system (BIOS) 112 may be stored in the nonvolatile memory 108 and can include the basic routines that help to transfer information between elements within the computer system 100.

The computer system 100 may further include or be coupled to a non-transitory computer-readable storage medium such as the storage device 114, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 114 and other drives associated with computer-readable media and computer-usable media may provide nonvolatile storage of data, data structures, computer-executable instructions, and the like.

The computer-code which is hard or soft coded may be provided in the form of one or more modules. The module(s) can be implemented as software and/or hard-coded in circuitry to implement the functionality described herein in whole or in part. The modules may be stored in the storage device 114 and/or in the volatile memory 110, which may include an operating system 116 and/or one or more program modules 118. All or a portion of the examples disclosed herein may be implemented as a computer program 120 stored on a transitory or non-transitory computer-usable or computer-readable storage medium (e.g., single medium or multiple media), such as the storage device 114, which includes complex programming instructions (e.g., complex computer-readable program code) to cause the processing circuitry 102 to carry out: applying a first machine learning anomaly detection method on one or several input signals, applying a second machine learning anomaly detection method on one or several input signals, each of the first and second machine learning anomaly detection methods applies a model previously trained on time series of data representative of defaultless operation of the transport vehicle, detecting a presence of anomaly based on combined results of said first and second machine learning anomaly detection methods; and in case of anomaly detection, raising an alarm and/or triggering predictive maintenance.

Thus, the computer-readable program code of the computer program 120 can comprise software instructions for implementing the functionality of the examples described herein when executed by the processing circuitry 102. In some examples, the storage device 114 may be a computer program product (e.g., readable storage medium) storing the computer program 120 thereon, where at least a portion of a computer program 120 may be loadable (e.g., into a processor) for implementing the functionality of the examples described herein when executed by the processing circuitry 102. The processing circuitry 102 may serve as a controller or control system for the computer system 100 that is to implement the functionality described herein.

The computer system 100 may include an input device interface 122 configured to receive input and selections to be communicated to the computer system 100 when executing instructions, such as from a keyboard, mouse, touch-sensitive surface, etc. Such input devices may be connected to the processing circuitry 102 through the input device interface 122 coupled to the system bus 106 but can be connected through other interfaces, such as a parallel port, an Institute of Electrical and Electronic Engineers (IEEE) 1394 serial port, a Universal Serial Bus (USB) port, an IR interface, and the like. The computer system 100 may include an output device interface 124 configured to forward output, such as to a display, a video display unit (e.g., a liquid crystal display (LCD) or a cathode ray tube (CRT)). The computer system 100 may include a communications interface 126 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1 : A method for automatic functioning assessment of a transport vehicle comprising collecting input signals formed of time series of data representative of the transport vehicle operation, the method further comprising: applying a first machine learning anomaly detection method on one or several input signals, applying a second machine learning anomaly detection method on one or several input signals, each of the first and second machine learning anomaly detection methods applies a model previously trained on time series of data representative of defaultless operation of the transport vehicle, detecting a presence of anomaly based on combined results of said first and second machine learning anomaly detection methods; in case of anomaly detection, raising an alarm and/or triggering predictive maintenance.

Example 2: The method of example 1, wherein the presence of anomaly is detected if the first and/or the second machine learning detection method indicates a presence of anomaly in the functioning of the transport vehicle.

Example 3: The method of examples 1 or 2, wherein the transport vehicle is a truck, comprising a plurality of electronic control units and an internal communication network, and wherein the input signal comprise data obtained by analyzing logs of exchanges between the electronic control units or sensors via the internal communication network.

Example 4: The method of any of examples 1 to 3, wherein the first machine learning anomaly detection method implements an autoencoder neural network on an input signal, to auto-encode the input signal into an intermediate signal of smaller dimension than the input signal, extrapolate the intermediate signal into a first reconstructed signal, the first reconstructed signal being of same dimension as the input signal, the method further comprising computing a first distance between the input signal and the first reconstructed signal using a predetermined metric; if the computed first distance exceeds a first predetermined threshold, saving a first detection of anomaly.

Example 5: The method of any of examples 1 to 4, wherein the first or the second machine learning anomaly detection method is one of the following methods: principal component analysis, Gaussian distribution, Multivariate Gaussian algorithm, or Isolation Forest.

Example 6: The method of example 5, wherein the second machine learning anomaly detection method is principal component analysis, the method comprising: multiply the input signal by a first principal component matrix to compute a vector representative of the input signal, and multiply the vector representative of the input signal by a second principal component matrix to obtain a second reconstructed signal, computing a second distance between the input signal and the second reconstructed signal using a predetermined metric, if the computed second distance exceeds a second predetermined threshold, saving a second detection of anomaly.

Example 7: The method of any of examples 1 to 3, comprising: applying principal component analysis (PCA) on the input signal to compute a vector representative of the input signal of smaller dimension than the input signal, applying an autoencoder neural network on said vector to obtain a reconstructed vector, and apply PCA reconstruction on the reconstructed vector to obtain a combined reconstructed signal.

Example 8: The method of example 7 further comprising: computing a third distance between the input signal and the combined reconstructed signal using a predetermined metric; if the computed third distance exceeds a third predetermined threshold, detect an anomaly of functioning and raise an alarm and/or trigger predictive maintenance.

Example 9: The method of any of examples 1 to 8, comprising selecting a detection window on time series of data representative of the transport vehicle operation.

Example 10: A device for automatic functioning assessment of a transport vehicle comprising a module configured to collect input signals formed of time series of data representative of the transport vehicle operation, the device further comprising a processor configured to implement: a first machine learning anomaly detection module on one or several input signals, a second machine learning anomaly detection module on one or several input signals, each of the first and second machine learning anomaly detection modules implements a model previously trained on time series of data representative of defaultless operation of the transport vehicle; a detecting module for detecting a presence of anomaly based on combined results of said first and second machine learning anomaly detection modules and a module configured to raise an alarm and/or trigger predictive maintenance, in case of anomaly detection.

Example 11: The device of example 10, wherein a presence of anomaly is detected if the first and/or the second machine learning detection module indicates a presence of anomaly in the functioning of the transport vehicle.

Example 12: The device of examples 10 or 11, wherein the transport vehicle is a truck, comprising a plurality of electronic control units and an internal communication network, and wherein the input signal comprise data obtained by analyzing logs of exchanges between the electronic control units.

Example 13: The device of any of examples 10 to 12, wherein the first machine learning anomaly detection module implements: auto-encode the input signal into an intermediate signal of smaller dimension than the input signal, extrapolate the intermediate signal into a reconstructed signal, the reconstructed signal being of same dimension as the input signal, compute a distance between the input signal and the reconstructed signal using a predetermined metric; if the computed distance exceeds a first predetermined threshold, saving a first detection of anomaly.

Example 14: The device of any of examples 10 to 13, wherein the first or the second machine learning anomaly detection module implements one of {principal component analysis, Gaussian distribution, Multivariate Gaussian algorithm, or Isolation Forest}.

Example 15: The device of example 14, wherein the second machine learning anomaly detection module implements principal component analysis, the device being configured to: multiply the input signal by a first principal component matrix to compute a vector representative of the input signal, and multiply the vector representative of the input signal by a second principal component matrix to obtain a second reconstructed signal, computing a second distance between the input signal and the second reconstructed signal using a predetermined metric; and if the computed second distance exceeds a second predetermined threshold, saving a second detection of anomaly.

Example 16: The device of any of examples 10 to 15, configured to implement: applying principal component analysis (PCA) on the input signal to compute a vector representative of the input signal of smaller dimension than the input signal, applying an autoencoder neural network on said vector to obtain a reconstructed vector, and apply PCA reconstruction on the reconstructed vector to obtain a combined reconstructed signal.

Example 17: The device of any of examples 10 to 16, comprising a selecting module for selecting a detection window on time series of data representative of the transport vehicle operation.

Example 18: A system for automatic functioning assessment of a transport vehicle comprising a device for automatic functioning assessment of a transport vehicle according to examples 10 to 17, and a transport vehicle, the device being configured to communicate with the transport vehicle and to receive from said transport vehicle series of data representative of the transport vehicle operation.

Example 19: A computer program product comprising program code for performing, when executed by the processing circuitry, the method of any of examples 1 to 9.

Example 20: A non-transitory computer-readable storage medium comprising instructions, which when executed by the processing circuitry, cause the processing circuitry to perform the method of any of examples 1 to 9.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1.   A method for automatic functioning assessment of a transport vehicle comprising collecting input signals formed of time series of data representative of the transport vehicle operation, the method further comprising:

   - applying (52, 56, 58, 60) a first machine learning anomaly detection method on one or several input signals,
   - applying (51, 53, 55, 57, 59) a second machine learning anomaly detection method on one or several input signals, each of the first and second machine learning anomaly detection methods applies a model previously trained on time series of data representative of defaultless operation of the transport vehicle,
   - detecting (62) a presence of anomaly based on combined results of said first and second machine learning anomaly detection methods;
   - in case of anomaly detection, raising (64) an alarm and/or triggering predictive maintenance.

2.   The method of claim 1, wherein the presence of anomaly is detected if the first and/or the second machine learning detection method indicates a presence of anomaly in the functioning of the transport vehicle.

3.   The method of claims 1 or 2, wherein the transport vehicle is a truck, comprising a plurality of electronic control units and an internal communication network, and wherein the input signal comprises data obtained by analyzing logs of exchanges between the electronic control units via the internal communication network.

4. The method of any of claims 1 to 3, wherein the first machine learning anomaly detection method implements an autoencoder neural network on an input signal, to auto-encode (52) the input signal (X) into an intermediate signal of smaller dimension than the input signal, extrapolate the intermediate signal into a first reconstructed signal (X'), the first reconstructed signal (X') being of same dimension as the input signal (X), and further comprises:

   - computing (56) a first distance between the input signal and the first reconstructed signal using a predetermined metric, and
   - if the computed first distance exceeds (58) a first predetermined threshold, saving (60) a first detection of anomaly.

5. The method of any of claims 1 to 4, wherein the second machine learning anomaly detection method is one of the following methods: principal component analysis, Gaussian distribution, Multivariate Gaussian algorithm, or Isolation Forest.

6. The method of claim 5, wherein the second machine learning anomaly detection method is principal component analysis, the method comprising: multiplying the input signal (X) by a first principal component matrix to compute a vector representative of the input signal, and multiplying the vector representative of the input signal by a second principal component matrix to obtain a second reconstructed signal (X"), computing a second distance between the input signal (X) and the second reconstructed signal (X") using a predetermined metric; and if the computed second distance exceeds (57) a second predetermined threshold, saving (59) a second detection of anomaly.

7. The method of any of claims 1 to 3, comprising: applying (72) principal component analysis (PCA) on the input signal to compute a vector representative of the input signal of smaller dimension than the input signal, applying an autoencoder neural network (74) on said vector to obtain a reconstructed vector, and applying the PCA reconstruction (76) on the reconstructed vector to obtain a combined reconstructed signal (Z").

8. The method of claim 7, further comprising: computing (78) a third distance between the input signal (X) and the combined reconstructed signal (Z") using a predetermined metric;

   - if the computed third distance exceeds (80) a third predetermined threshold, detecting (82) an anomaly of functioning and raising (84) an alarm and/or triggering predictive maintenance.

9. The method of any of claims 1 to 8, comprising selecting a detection window on time series of data representative of the transport vehicle operation.

10. A device for automatic functioning assessment of a transport vehicle comprising a module configured to collect input signals formed of time series of data representative of the transport vehicle operation, the device further comprising a processor configured to implement:

   - a first machine learning anomaly detection module (36) on one or several input signals,
   - a second machine learning anomaly detection module (38) on one or several input signals, wherein each of the first and second machine learning anomaly detection modules implements a model previously trained on time series of data representative of defaultless operation of the transport vehicle,
   - a detecting module (40) for detecting a presence of anomaly based on combined results of said first and second machine learning anomaly detection modules, and
   - a module (42) configured to raise an alarm and/or trigger predictive maintenance, in case of anomaly detection.

11. The device of claim 10, wherein a presence of anomaly is detected if the first and/or the second machine learning detection module indicates a presence of anomaly in the functioning of the transport vehicle.

12. The device of any of claims 10 or 11, wherein the transport vehicle is a truck, comprising a plurality of electronic control units (10, 12, 14) and an internal communication network, and wherein the input signal comprises data obtained by analyzing logs $(32_1,...,32_Q)$ of exchanges between the electronic control units (10, 12, 14).

13. A system for automatic functioning assessment of a transport vehicle comprising a device for automatic functioning assessment of a transport vehicle according to claims 10 to 12, and a transport vehicle, the device being configured to communicate with the transport vehicle and to receive, from said transport vehicle, time series of data representative of the transport vehicle operation.

14. A computer program product comprising program code for performing, when executed by the processing circuitry, the method of any of claims 1 to 9.

**15.** A non-transitory computer-readable storage medium comprising instructions, which when executed by the processing circuitry, cause the processing circuitry to perform the method of any of claims 1 to 9.

FIG.1

EP 4 664 220 A1

**FIG.2**

FIG.3

EP 4 664 220 A1

Obtain input signal — 70

Apply PCA
X->Z — 72

Apply autoencoder
Z->Z' — 74

Reconstruct (PCA)
Z'->Z" — 76

Compute d(X, Z") — 78

Compare to Dist-3 — 80

Anomaly detection — 82

Alarm/predictive
maintenance — 84

## FIG.4

FIG.5

Europäisches
Patentamt

European
Patent Office

Office européen
des brevets

# EUROPEAN SEARCH REPORT

**Application Number**

EP 25 18 2601

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/110056 A1 (GULLIKSON KEVIN [US] ET AL) 13 April 2023 (2023-04-13) * paragraphs [0036], [0048], [0055], [0075], [0076], [0082], [0093], [0094], [0108], [0109], [0132]; figures 3, 7 * | 1-15 | INV. G05B23/02 G06N3/045 ADD. G07C5/08 |
| X | US 2023/325292 A1 (ARDEL ALEXANDRU [US] ET AL) 12 October 2023 (2023-10-12) * paragraphs [0006] - [0008], [0029], [0067], [0071], [0072], [0075], [86to95], [0177]; figure 2 * | 1,10,14, 15 2-9, 11-13 | |
| A | | | |
| A | US 2023/274147 A1 (CHU CHUN-TE [US] ET AL) 31 August 2023 (2023-08-31) * paragraphs [0018], [0078], [129136]; figure 4 * | 1-15 | |
| A | US 2023/186053 A1 (ANDONI SARI [US] ET AL) 15 June 2023 (2023-06-15) * paragraphs [0018] - [0022], [0038], [0039]; figure 2 * | 1-15 | |
| A | US 2020/379454 A1 (TRINH HAI ANH [US] ET AL) 3 December 2020 (2020-12-03) * paragraphs [0039], [0044], [0055] - [0060], [0066], [0074]; claims 1-7; figures 3, 4C * | 1-15 | TECHNICAL FIELDS SEARCHED (IPC) G05B G07C G06N G06F |

The present search report has been drawn up for all claims

| Place of search | Date of completion of the search | Examiner |
|---|---|---|
| Munich | 24 October 2025 | Juillot, Olivier J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    ......................................................................................

& : member of the same patent family, corresponding
document

## ANNEX TO THE EUROPEAN SEARCH REPORT
## ON EUROPEAN PATENT APPLICATION NO.

EP 25 18 2601

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | Publication date | Patent family member(s) | | Publication date |
|---|---|---|---|---|
| US 2023110056 A1 | 13-04-2023 | CA | 3235376 A1 | 20-04-2023 |
| | | GB | 2631337 A | 01-01-2025 |
| | | US | 2023110056 A1 | 13-04-2023 |
| | | WO | 2023064397 A1 | 20-04-2023 |
| US 2023325292 A1 | 12-10-2023 | GB | 2632962 A | 26-02-2025 |
| | | US | 2023325292 A1 | 12-10-2023 |
| | | WO | 2023196129 A1 | 12-10-2023 |
| US 2023274147 A1 | 31-08-2023 | US | 2022156589 A1 | 19-05-2022 |
| | | US | 2023274147 A1 | 31-08-2023 |
| US 2023186053 A1 | 15-06-2023 | US | 2023186053 A1 | 15-06-2023 |
| | | WO | 2023107836 A1 | 15-06-2023 |
| US 2020379454 A1 | 03-12-2020 | NONE | | |

For more details about this annex : see Official Journal of the European Patent Office, No. 12/82